# EUROPÄISCHE PATENTSCHRIFT

(11) **EP 2 307 276 B1**
(45) Veröffentlichungstag und Bekanntmachung des Hinweises auf die Patenterteilung: **09.08.2017**
(21) Anmeldenummer: 09768969.9
(22) Anmeldetag: 23.06.2009
(51) Int. Cl.: B64D 13/00

(54) **LUFTKANAL ZUR UMGEBUNGSLUFTZUFUHR IN EINEM FLUGZEUG**
AIR DUCT FOR SUPPLYING AMBIENT AIR IN AN AIRCRAFT
CONDUIT D'AIR SERVANT À L'AMENÉE D'AIR AMBIANT DANS UN AÉRONEF

(30) Priorität: 26.06.2008 DE 102008030399; 26.06.2008 US 75814 P
(43) Veröffentlichungstag der Anmeldung: 13.04.2011
(73) Patentinhaber: Airbus Operations GmbH, 21129 Hamburg (DE)
(72) Erfinder: KASTELL, Dirk, 22587 Hamburg (DE); ROERING, Sebastian, 20359 Hamburg (DE); CASAS NORIEGA, Wilson Willy, 21147 Hamburg (DE)
(74) Vertreter: Schicker, Silvia
(86) Internationale Anmeldenummer: PCT/EP2009/004513
(87) Internationale Veröffentlichungsnummer: WO 2009/156120

(56) Entgegenhaltungen:
- WO-A-2005/016748
- WO-A-2005/063569
- WO-A-2005/063579
- US-A- 4 203 566
- US-B1- 6 349 899

## Beschreibung

Die Erfindung betrifft einen Luftkanal zur Umgebungsluftzufuhr in einem Flugzeug.
In modernen Flugzeugen eingesetzte Luftkanäle zur Versorgung verschiedener sich an Bord des Flugzeugs befindender Systeme mit Umgebungsluft sind üblicherweise als Stauluftkanäle mit einem Lufteinlass sowie einem Diffusor ausgebildet. Im Flugbetrieb des Flugzeugs strömt Umgebungsluft durch den Lufteinlass in den Stauluftkanal. Im Diffusor wandelt sich aufgrund der Verlangsamung der Luftströmung ein Teil des dynamischen Drucks der Umgebungsluftströmung in statischen Druck um. Infolge dessen entsteht in dem Stauluftkanal ein gegenüber dem Umgebungsdruck erhöhter statischer Druck, der sogenannte Staudruck, der dafür sorgt, dass die den Stauluftkanal durchströmende Luft einer mit Umgebungsluft zu versorgenden Flugzeugeinrichtung, wie z.B. einem in dem Stauluftkanal angeordneten Wärmetauscher zugeführt wird. Im Bodenbetrieb des Flugzeugs sorgt dagegen eine mechanische Fördereinrichtung, wie z.B. ein Gebläse für die gewünschte Umgebungsluftzufuhr durch den Stauluftkanal zu der mit Umgebungsluft zu versorgenden Flugzeugeinrichtung.
Der Lufteinlass eines Stauluftkanals kann in Form einer Staulufthutze ausgebildet oder in die umströmte Flugzeugoberfläche integriert sein, siehe US 6 349 899. Ein in die umströmte Flugzeugoberfläche integrierter Lufteinlass ermöglicht eine Verringerung des durch den Lufteinlass verursachten Luftwiderstands im Flugbetrieb des Flugzeugs. Eine optimierte Luftzufuhr in den Stauluftkanal bei gleichzeitig geringem Luftwiderstand kann beispielsweise mit Hilfe eines in die umströmte Flugzeugoberfläche integrierten NACA (National Advisory Committee for Aeronautics)-Einlasses realisiert werden.
Bei einigen mit Umgebungsluft zu versorgenden Flugzeugsystemen besteht das Problem, dass diese System im Bodenbetrieb des Flugzeugs einen größeren Luftmassenstrom benötigen als im Flugbetrieb des Flugzeugs. Ein für den Luftmassenstrombedarf derartiger Flugzeugsysteme im Flugbetrieb optimierter Stauluftkanaleinlass müsste zur Minimierung des durch den Lufteinlass verursachten Luftwiderstands im Flugbetrieb des Flugzeugs einen relativ kleinen Querschnitt aufweisen. Im Gegensatz dazu wäre im Bodenbetrieb des Flugzeugs ein möglichst großer Stauluftkanaleinlassquerschnitt vorteilhaft, um ein Gebläse, das im Bodenbetrieb des Flugzeugs Umgebungsluft durch den Stauluftkanal zu dem mit Umgebungsluft zu versorgenden Flugzeugsystem fördert, mit einem möglichst geringen Förderdruck betreiben zu können. Ein in einem Stauluftkanal mit einem für den Flugbetrieb optimierten kleinen Stauluftkanaleinlassquerschnitt eingesetztes Gebläse muss dagegen zur Bereitstellung des erforderlichen hohen Förderdrucks überdimensioniert werden, was die nachteilige Folge hat, dass dieses Gebläse ein großes Volumen, ein hohes Gewicht und einen hohen Energieverbrauch hat und im Betrieb relativ viel Lärm verursacht.

Der Erfindung liegt die Aufgabe zugrunde, einen Luftkanal zur Umgebungsluftzufuhr in einem Flugzeug bereitzustellen, der es ermöglicht, ein Flugzeugsystem, das im Bodenbetrieb des Flugzeugs einen größeren Luftmassenstrom benötigt als im Flugbetrieb des Flugzeugs auf energieeffiziente Weise und ohne den Einsatz einer überdimensionierten Fördereinrichtung mit Umgebungsluft zu versorgen.

Zur Lösung dieser Aufgabe umfasst ein erfindungsgemäßer Luftkanal zur Umgebungsluftzufuhr in einem Flugzeug einen Lufteinlass, der beispielsweise in Form einer in einer Flugzeugaußenhaut vorgesehenen Öffnung ausgebildet sein kann. Stromabwärts des Lufteinlasses erstreckt sich ein Strömungskanalabschnitt, der im Betrieb des Luftkanals von Umgebungsluft durchströmt wird. In dem Strömungskanalabschnitt kann eine mit Umgebungsluft zu versorgende Flugzeugeinrichtung, beispielsweise ein Wärmetauscher angeordnet sein. Im Flugbetrieb eines mit dem erfindungsgemäßen Luftkanal ausgestatteten Flugzeugs strömt die Flugzeugaußenhaut umströmende Luft durch den Lufteinlass in den Strömungskanalabschnitt des Luftkanals, ohne dass hierzu eine zusätzliche Fördereinrichtung erforderlich wäre. Um jedoch auch im Bodenbetrieb des mit dem erfindungsgemäßen Luftkanal ausgestatten Flugzeugs eine ordnungsgemäße Umgebungsluftzufuhr zu der mit Umgebungsluft zu versorgenden Flugzeugeinrichtung zu gewährleisten, umfasst der erfindungsgemäße Luftkanal ferner eine Fördereinrichtung. Die Fördereinrichtung, die beispielsweise in Form eines Gebläses oder eines Luftinjektionssystems ausgebildet sein kann, dient dazu, im Bodenbetrieb des mit dem erfindungsgemäßen Luftkanal ausgestatteten Flugzeugs Umgebungsluft durch den Lufteinlass und den Strömungskanalabschnitt zu der mit Umgebungsluft zu versorgenden Flugzeugeinrichtung zu fördern.

Der erfindungsgemäß Luftkanal umfasst schließlich eine Strömungssteuerungsklappe, die dazu eingerichtet ist, in einer ersten Stellung den Lufteinlass vollständig zu verschließen und somit den Eintritt von Umgebungsluft in den Lufteinlass und den Strömungskanalabschnitt des Luftkanals zu unterbinden. Vorzugsweise befindet sich die Strömungssteuerungsklappe in ihrer ersten Stellung, wenn die mit Umgebungsluft zu versorgende Flugzeugeinrichtung nicht in Betrieb ist oder sich in einem Betriebszustand befindet, in der sie keine Umgebungsluft benötigt. Der Strömungssteuerungsklappe des erfindungsgemäßen Luftkanals ist ferner dazu eingerichtet, in einer zweiten Stellung einen ersten Strömungsquerschnitt des Lufteinlasses freizugeben und in einer dritten Stellung einen gegenüber dem ersten Strömungsquerschnitt vergrößerten zweiten Strömungsquerschnitt des Lufteinlasses freizugeben. Vorzugsweise befindet sich die Strömungssteuerungsklappe des erfindungsgemäßen Luftkanals in ihrer zweiten Stellung, wenn die mit Umgebungsluft zu versorgende Flugzeugeinrichtung einen verhältnismäßig geringen Umgebungsluftbedarf hat. In ihrer dritten Stellung ermöglicht die Strömungssteuerungsklappe dagegen die Zufuhr eines großen Luftmassenstroms zu der mit Umgebungsluft zu versorgenden Flugzeugeinrichtung.
Die Strömungssteuerungsklappe des erfindungsgemäßen Luftkanals ist so gestaltet und angeordnet, dass ein erster Oberflächenabschnitt der Strömungssteuerungsklappe in der zweiten Stellung der Strömungssteuerungsklappe im Bereich des Lufteinlasses im Wesentlichen in einer Ebene mit dem den Lufteinlass umgebenden Flugzeugaußenhautabschnitt ausgerichtet ist. Mit anderen Worten, die Strömungssteuerungsklappe weist eine Form auf und ist so befestigt, dass sich der erste Oberflächenabschnitt im Wesentlichen in einer Ebene mit dem den Lufteinlass umgebenden Flugzeugaußenhautabschnitt über einen Teilbereich des Lufteinlasses erstreckt. Wenn sich die Strömungssteuerungsklappe in ihrer zweiten Stellung befindet, erzeugt sie einen besonders geringen Luftwiderstand. Im Flugbetrieb eines mit dem erfindungsgemäßen Luftkanal ausgestatteten Flugzeugs befindet sich die Strömungssteuerungsklappe daher vorzugsweise in ihrer zweiten Stellung.
In der dritten Stellung der Strömungssteuerungsklappe ist der erste Oberflächenabschnitt der Strömungssteuerungsklappe dagegen in einem Winkel zu dem den Lufteinlass umgebenden Flugzeugaußenhautabschnitt ausgerichtet. In ihrer dritten Stellung erzeugt die Strömungssteuerungsklappe somit einen größeren Luftwiderstand, sie gibt jedoch, wie bereits erwähnt, einen größeren Strömungsquerschnitt des Lufteinlasses frei als in ihrer zweiten Stellung. Folglich wird die Strömungssteuerungsklappe des erfindungsgemäßen Luftkanals vorzugsweise dann in ihre dritte Stellung bewegt, wenn die mit Umgebungsluft zu versorgende Flugzeugeinrichtung einen hohen Umgebungsluftbedarf hat. Dies kann sowohl im Flugbetrieb als auch im Bodenbetrieb eines mit dem erfindungsgemäßen Luftkanal ausgestatteten Flugzeugs der Fall sein.
Obwohl die Strömungssteuerungsklappe des erfindungsgemäßen Luftkanals auch im Flugbetrieb, beispielsweise im Steigflug eines mit dem erfindungsgemäßen Luftkanal ausgestatten Flugzeugs in ihre dritte Stellung gesteuert werden kann, ist der erfindungsgemäße Luftkanal besonders vorteilhaft zur Versorgung einer Flugzeugeinrichtung mit Umgebungsluft einsetzbar, die im Bodenbetrieb des Flugzeugs einen höheren Umgebungsluftbedarf hat als im Flugbetrieb des Flugzeugs. Im Flugbetrieb des Flugzeugs kann sich die Strömungssteuerungsklappe dann nämlich überwiegend in ihrer zweiten Stellung befinden, in der sie durch die Verkleinerung des Strömungsquerschnitts des Lufteinlasses dafür sorgt, dass der durch den Lufteinlass verursachte Luftwiderstand verhältnismäßig gering bleibt. Dies wirkt sich vorteilhaft auf den Treibstoffverbrauch des Flugzeugs aus. Im Bodenbetrieb des Flugzeugs kann sich die Strömungssteuerungsklappe dagegen in ihrer dritten Stellung befinden, in der sie einen großen Querschnitt des Lufteinlasses freigibt. Die Fördereinrichtung, die im Bodenbetrieb des Flugzeugs Umgebungsluft durch den Lufteinlass und den Strömungskanalabschnitt des Luftkanals fördert, kann daher deutlich kleiner ausgelegt werden, als dies möglich wäre, wenn die Größe des Lufteinlasses für den Flugbetrieb des Flugzeugs optimiert wäre.
Ein weiterer Vorteil des erfindungsgemäßen Luftkanals besteht darin, dass sich in einem Fehlerfall einer vollständig geöffneten Klappe ein geringerer Luftwiderstand einstellt, als bei einem für die gleichen Bedingungen während des Fluges und am Boden ausgelegten konventionellen Luftkanal. Bei einem konventionellen Luftkanal ist daher in diesem Fall der aus dem höheren Luftaußenstrom resultierende Kanalinnendruck deutlich höher, was eine entsprechende Auslegung des Kanals mit der damit verbundenen Gewichtserhöhung erforderlich macht.
Vorzugsweise ist die Strömungssteuerungsklappe des erfindungsgemäßen Luftkanals ferner so gestaltet und angeordnet, dass ein zweiter Oberflächenabschnitt der Strömungssteuerungsklappe in der zweiten Stellung der Strömungssteuerungsklappe in einem Winkel zu einem Wandabschnitt des Strömungskanalabschnitts ausgerichtet ist, so dass sich der Strömungsquerschnitt des Strömungskanalteilabschnitts in Strömungsrichtung der durch den Strömungskanalabschnitt strömenden Umgebungsluft vergrößert. Mit anderen Worten, der zweite Oberflächenabschnitt der Strömungssteuerungsklappe bildet gemeinsam mit dem Wandabschnitt des Strömungskanalabschnitts einen Strömungskanalteilabschnitt mit einem sich in Strömungsrichtung der durch den Strömungskanalabschnitt strömenden Umgebungsluft vergrößernden Querschnitt. Folglich bilden der zweite Oberflächenabschnitt der Strömungssteuerungsklappe und der Wandabschnitt des Strömungskanalabschnitts in der zweiten Stellung der Strömungssteuerungsklappe einen die Strömung durch den Strömungskanalabschnitt beeinflussenden Diffusor.

In dem von dem zweiten Oberflächenabschnitt der Strömungssteuerungsklappe und dem Wandabschnitt des Strömungskanalabschnitts gebildeten Diffusor wird die über den Lufteinlass in den Luftkanal zugeführte Umgebungsluftströmung verlangsamt, so dass sich ein Teil des dynamischen Drucks der Umgebungsluftströmung in statischen Druck umwandelt. Folglich entsteht ein gegenüber dem Umgebungsdruck erhöhter statischer Druck, d.h. ein Staudruck, der für eine ordnungsgemäße Umgebungsluftzufuhr zu der mit Umgebungsluft zu versorgenden Flugzeugeinrichtung, beispielsweise einem in dem Strömungskanalabschnitt des Luftkanals angeordneten Wärmetauscher sorgt. Die Strömungssteuerungsklappe des erfindungsgemäßen Luftkanals erfüllt somit die Doppelfunktion, einerseits einen gewünschten Strömungsquerschnitt des Lufteinlasses einzustellen und andererseits in ihrer zweiten Stellung gemeinsam mit dem Wandabschnitt des Strömungskanalabschnitts einen Diffusor zu bilden.

In der dritten Stellung der Strömungssteuerungsklappe ist der zweite Oberflächenabschnitt der Strömungssteuerungsklappe dagegen vorzugsweise im Wesentlichen parallel zu dem Wandabschnitt des Strömungskanalabschnitts ausgerichtet. Die Strömung durch den Strömungskanalabschnitt des Luftkanals wird somit durch die Strömungssteuerungsklappe nur minimal beeinflusst, so eine ungehinderte Umgebungsluftbeförderung durch den Luftkanal mittels der Fördereinrichtung möglich ist.

In der dritten Stellung der Strömungssteuerungsklappe ist der erste Oberflächenabschnitt der Strömungssteuerungsklappe im Bereich des Lufteinlasses vorzugsweise in einem Winkel von ungefähr 10 Grad zu dem den Lufteinlass umgebenden Flugzeugaußenhautabschnitt ausgerichtet. Eine Strömungssteuerungsklappe die derart geformt und angeordnet ist, dass der erste Oberflächenabschnitt in der dritten Stellung der Strömungssteuerungsklappe mit dem den Lufteinlass umgebenden Flugzeugau-Benhautabschnitt einen Winkel von ungefähr 10 Grad bildet, ermöglich einerseits die Öffnung eines großen Strömungsquerschnitts des Lufteinlasses, vergrößert andererseits jedoch den durch den Lufteinlass verursachten Luftwiderstand nicht übermäßig.

Die Strömungssteuerungsklappe des erfindungsgemäßen Luftkanals ist ferner vorzugsweise so gestaltet und angeordnet, dass eine Kante der Strömungssteuerungsklappe, beispielsweise eine Kante, die von dem ersten und dem zweiten Oberflächenabschnitt der Strömungssteuerungsklappe gebildet wird, in der dritten Stellung der Strömungssteuerungsklappe in eine das Flugzeug umströmende Luftströmung ragt. Dadurch kann Luft mit einem höheren Impuls aus der Grenzschicht in den Luftkanal geführt werden. Dies führt zwar zu einer Erhöhung des Luftwiderstands, der Luftmassenstromregelbereich wird jedoch deutlich vergrößert.

Die Strömungssteuerungsklappe des erfindungsgemäßen Luftkanals kann einen im Wesentlichen dreieckigen Querschnitt aufweisen. Beispielsweise kann der Querschnitt der Strömungssteuerungsklappe die Form eines gleichschenkligen Dreiecks haben.

Vorzugsweise ist die Strömungssteuerungsklappe um eine Achse drehbar, die im Bereich des Schwerpunkts der Strömungssteuerungsklappe angeordnet ist. Eine im Bereich des Schwerpunkts der Strömungssteuerungsklappe angeordnete Drehachse ermöglicht eine gute Beweglichkeit der Strömungssteuerungsklappe mit verhältnismäßig geringem Energieaufwand.

Beispielsweise kann die Drehachse der Strömungssteuerungsklappe im Wesentlichen im Bereich einer sich durch den Strömungskanalabschnitt des erfindungsgemäßen Luftkanals erstreckenden zentralen Längsachse angeordnet sein. Bei einer derartigen Anordnung der Drehachse verschließt der erste Oberflächenabschnitt der Strömungssteuerungsklappe in der zweiten Stellung der Strömungssteuerungsklappe einen mittleren Bereich des Lufteinlassquerschnitts, d.h. der erste Oberflächenabschnitt der Strömungssteuerungsklappe unterteilt die Querschnittsfläche des Lufteinlasses in einen ersten Abschnitt und einen zweiten Abschnitt. In der dritten Stellung der Strömungssteuerungsklappe, wenn der erste Oberflächenabschnitt der Strömungssteuerungsklappe in einem Winkel zu dem den Lufteinlass umgebenden Flugzeugaußenhautabschnitt ausgerichtet ist, erstreckt sich die Strömungssteuerungsklappe dagegen im Wesentlichen entlang der zentralen Längsachse des Strömungskanalabschnitts.

Der erfindungsgemäße Luftkanal kann ferner eine Betätigungseinrichtung umfassen, die dazu eingerichtet ist, die Strömungssteuerungsklappe stufenlos zwischen ihrer ersten und ihrer dritten Stellung zu bewegen. Die Betätigungseinrichtung kann beispielsweise eine mechanische, eine elektrische oder eine elektromechanische Betätigungseinrichtung sein. Ferner kann eine Steuereinrichtung vorhanden sein, die die Betätigungseinrichtung entsprechend ansteuert, um für eine Verstellung der Strömungssteuerungsklappe in eine gewünschte Stellung zu sorgen.

Ferner kann der erfindungsgemäße Luftkanal eine Halteeinrichtung umfassen, die dazu eingerichtet ist, die Strömungssteuerungsklappe in einer gewünschten Stellung zu halten. Die Betätigungseinrichtung, die dazu dient, die Strömungssteuerungsklappe zwischen ihrer ersten und ihrer dritten Stellung zu bewegen, kann gleichzeitig die Halteeinrichtung bilden, die die Strömungssteuerungsklappe in einer gewünschten Stellung hält. Alternativ dazu kann jedoch auch eine zusätzliche Halteeinrichtung zum Halten der Strömungssteuerungsklappe in einer gewünschten Stellung vorgesehen sein.

Bei einem erfindungsgemäßen Verfahren zum Betreiben eines oben beschriebenen Luftkanals wird die Strömungssteuerungsklappe zur Versorgung einer Flugzeugeinrichtung mit Umgebungsluft im Flugbetrieb eines mit dem Luftkanal ausgestatteten Flugzeugs in ihre zweite Stellung bewegt. Im Bodenbetrieb des mit dem Luftkanal ausgestatteten Flugzeugs wird die Strömungssteuerungsklappe zur Versorgung der Flugzeugeinrichtung mit Umgebungsluft dagegen in ihre dritte Stellung bewegt. Mit Hilfe des erfindungsgemäßen Verfahrens kann eine Flugzeugeinrichtung, die üblicherweise im Flugbetrieb des Flugzeugs einen geringeren Umgebungsluftbedarf hat als im Bodenbetrieb des Flugzeugs auf energieeffiziente Weise stets mit einer ausreichenden Menge Umgebungsluft versorgt werden.

In besonderen Betriebssituationen der Flugzeugeinrichtung, d.h. beispielsweise dann, wenn die Flugzeugeinrichtung im Flugbetrieb des Flugzeugs ausnahmsweise einen hohen Umgebungsluftbedarf hat oder im Steigflug des Flugzeugs kann die Strömungssteuerungsklappe des Luftkanals jedoch auch im Flugbetrieb des Flugzeugs in ihre dritte Stellung bewegt werden, um einen vergrößerten Lufteinlassströmungsquerschnitt freizugeben. Ebenso kann die Strömungssteuerungsklappe im Bodenbetrieb des Flugzeugs in ihre zweite Stellung bewegt werden, wenn die Flugzeugeinrichtung einen geringeren Umgebungsluftbedarf hat.

Eine bevorzugte Ausführungsform der Erfindung wird nun anhand der beigefügten schematischen Zeichnungen näher erläutert, von denen
- Figur 1: eine Querschnittsdarstellung eines Luftkanals mit einer zwischen einer ersten und einer dritten Stellung verstellbaren Strömungssteuerungsklappe zeigt,
- Figur 2: den Luftkanal gemäß Figur 1 zeigt, wobei sich die Strömungssteuerungsklappe in ihrer ersten Stellung befindet,
- Figur 3: den Luftkanal gemäß Figur 1 zeigt, wobei sich die Strömungssteuerungsklappe in ihrer zweiten Stellung befindet,
- Figur 4: den Luftkanal gemäß Figur 1 zeigt, wobei sich die Strömungssteuerungsklappe in ihrer dritten Stellung befindet, und
- Figur 5: eine Draufsicht des Luftkanals gemäß Figur 1 zeigt.

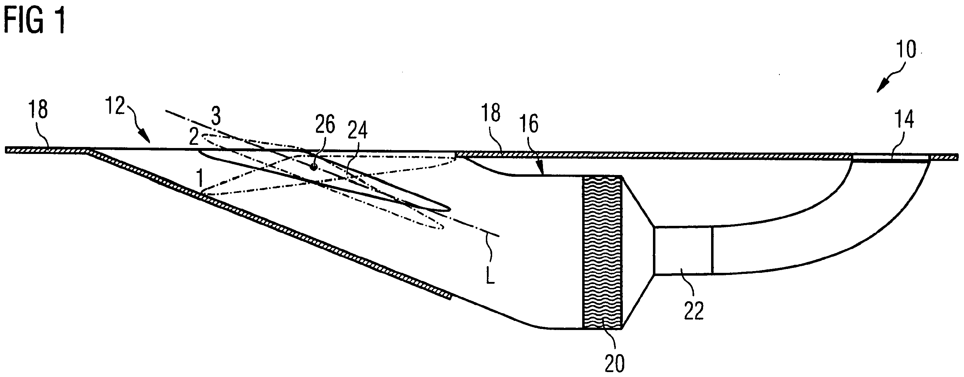

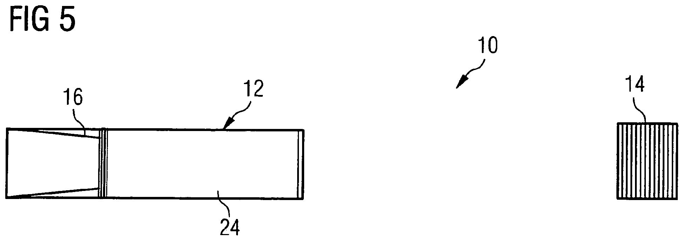

Ein in den Figuren 1 bis 5 gezeigter Luftkanal 10 umfasst einen Lufteinlass 12 sowie einen sich stromabwärts des Lufteinlasses 12 bis zu einem Luftauslass 14 erstreckenden Strömungskanalabschnitt 16. Der Lufteinlass 12 ist in eine Außenhaut eines mit dem Luftkanal 10 ausgestatteten Flugzeugs integriert und folglich von einem entsprechenden Abschnitt 18 der Flugzeugaußenhaut umgeben. Der Luftkanal 10 dient dazu, einen in dem Strömungskanalabschnitt 16 angeordneten Wärmetauscher 20 mit Umgebungsluft zu versorgen.

Im Flugbetrieb des mit dem Luftkanal 10 ausgestatten Flugzeugs strömt die Flugzeugaußenhaut umströmende Umgebungsluft durch den Lufteinlass 12 in den Strömungskanalabschnitt 16 und durch den Wärmetauscher 20. Im Bodenbetrieb des Flugzeugs sorgt dagegen ein Gebläse 22 dafür, dass ausreichend Umgebungsluft durch den Lufteinlass 12 und den Strömungskanalabschnitt 16 zu dem Wärmetauscher 20 gefördert wird. In der in den Figuren 1 bis 5 gezeigten Ausführungsform des Lufkanals 10 ist das Gebläse 22 stromabwärts des Wärmetauschers 20 in dem Strömungskanalabschnitt 16 angeordnet.

Der Luftkanal 10 umfasst ferner eine Strömungssteuerungsklappe 24, die im Bereich des Lufteinlasses 12 angeordnet ist und stufenlos zwischen einer ersten und einer dritten Stellung verstellbar ist (siehe Figur 1). Die Strömungssteuerungsklappe 24 weist einen Querschnitt auf, der im Wesentlichen die Form eines gleichschenkligen Dreiecks hat. Im Bereich eines Schwerpunkts der Strömungssteuerungsklappe 24 ist eine Drehachse 26 vorgesehen, um die die Strömungssteuerungsklappe 24 drehbar ist, um die Strömungssteuerungsklappe 24 zwischen ihrer ersten und ihrer dritten Stellung zu bewegen. Die Drehachse 26 ist im Bereich einer sich durch den Strömungskanalabschnitt 16 des Luftkanals 10 erstreckenden zentralen Längsachse L angeordnet.

Ein in den Figuren 1 bis 5 nicht gezeigter elektromechanischen Aktuator dient dazu, die Strömungssteuerungsklappe 24 zwischen ihrer ersten und ihrer dritten Stellung zu bewegen. Der elektromechanische Aktuator wird mit Hilfe einer elektronischen Steuereinheit gesteuert. Ferner ist der elektromechanische Aktuator dazu geeignet, die Strömungssteuerungsklappe 24 in einer gewünschten Stellung zu halten.

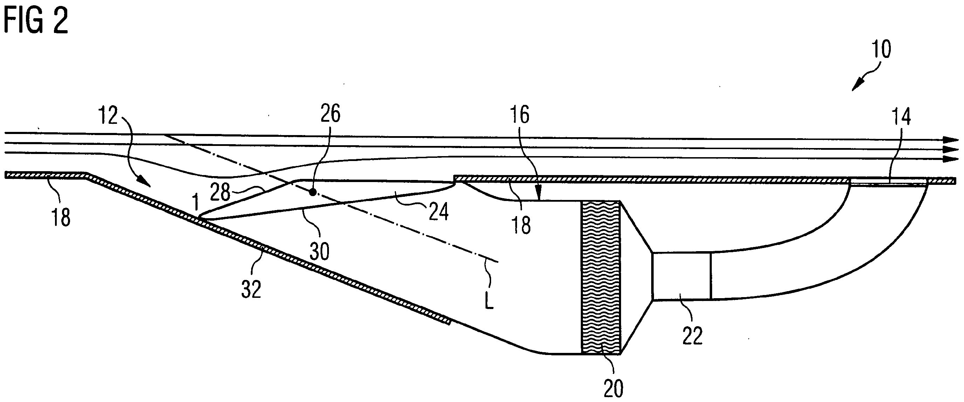

Wie insbesondere in Figur 2 zu erkennen ist, verschließt die Strömungssteuerungsklappe 24 in ihrer ersten Stellung den Lufteinlass 12 vollständig, so dass die Zufuhr von Umgebungsluft durch den Lufteinlass 12 in den Strömungskanalabschnitt 16 des Luftkanals 10 unterbunden wird. Der elektromechanische Aktuator steuert die Strömungssteuerungsklappe 24 dann in die in Figur 2 gezeigte erste Stellung, wenn der Wärmetauscher 20 nicht mit Umgebungsluft versorgt werden muss.

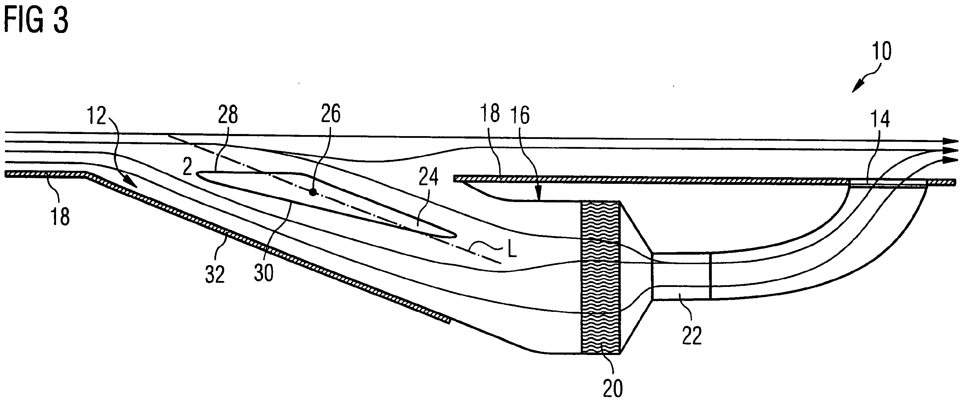

In ihrer in Figur 3 gezeigten zweiten Stellung gibt die Strömungssteuerungsklappe 24 dagegen einen ersten Strömungsquerschnitt des Lufteinlasses 12 frei. Ein erster Oberflächenabschnitt 28 der Strömungssteuerungsklappe 24 erstreckt sich dabei im Wesentlichen parallel zu und in einer Ebene mit dem den Lufteinlass 12 umgebenden Flugzeugaußenhautabschnitt 18. Aufgrund der Anordnung der Drehachse 26 der Strömungssteuerungsklappe 24 im Bereich der zentralen Längsachse L des Strömungskanalabschnitts 16 erstreckt sich der erste Oberflächenabschnitt 28 der Strömungssteuerungsklappe 24 in einem mittleren Bereich des Lufteinlassquerschnitts. In der zweiten Stellung der Strömungssteuerungsklappe 24 ist folglich ein mittlerer Bereich des Strömungsquerschnitts des Lufteinlasses 12 verschlossen, während äußere Bereiche des Strömungsquerschnitts des Lufteinlasses 12 zur Durchströmung mit Umgebungsluft freigegeben sind.

Da der erste Oberflächenabschnitt 28 der Strömungssteuerungsklappe 24 in der zweiten Stellung des Strömungssteuerungsklappe 24 im Wesentlichen parallel zu dem den Lufteinlass 12 umgebenden Flugzeugaußenhautabschnitt 18 ausgerichtet ist, kann der durch den Lufteinlass 12 verursachte zusätzliche Luftwiderstand des Flugzeugs in vorteilhafter Weise minimiert werden. Die Größe des in der zweiten Stellung der Strömungssteuerungsklappe 24 freigegebenen Strömungsquerschnitts des Lufteinlasses 12 ist so dimensioniert, dass im Flugbetrieb des Flugzeugs eine ausreichende Versorgung des Wärmetauschers 20 mit Umgebungsluft gewährleistet ist.

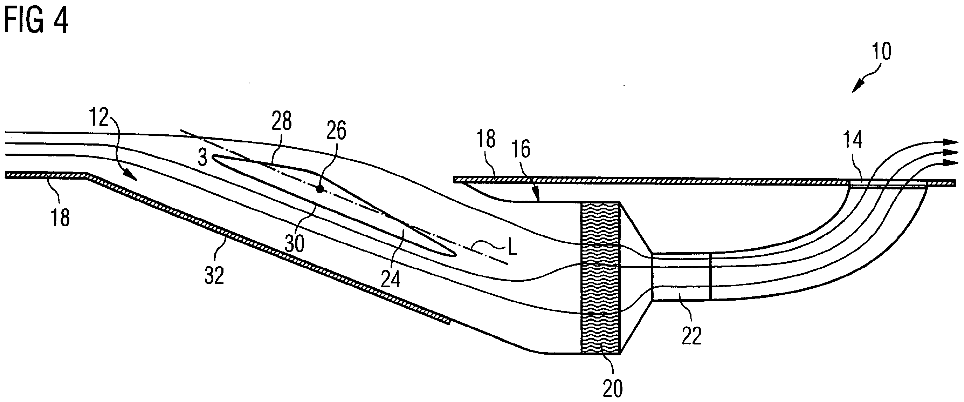

In der in Figur 4 gezeigten dritten Stellung der Strömungssteuerungsklappe 24 gibt die Strömungssteuerungsklappe 24 dagegen einen zweiten Strömungsquerschnitt des Lufteinlasses 12 frei, der größer ist als der in der zweiten Stellung der Strömungssteuerungsklappe 24 freigegebene erste Strömungsquerschnitt des Lufteinlasses 12. Der erste Oberflächenabschnitt 28 der Strömungssteuerungsklappe 24 ist in der dritten Stellung der Strömungssteuerungsklappe 24 in einem Winkel von ungefähr 10 Grad zu dem den Lufteinlass 12 umgebenden Flugzeugaußenhautabschnitt 18 angeordnet. Wenn sich die Strömungssteuerungsklappe 24 in ihrer dritten Stellung befindet, ist der Strömungsquerschnitt des Lufteinlasses 12 maximal geöffnet, so dass eine ungehinderte Umgebungsluftströmung durch den Lufteinlass 12 und den Strömungskanalabschnitt 16 möglich ist. Allerdings verursacht der Lufteinlass 12 mit einer sich in ihrer dritten Stellung befindenden Strömungssteuerungsklappe 24 einen vergrößerten Luftwiderstand.

Die Strömungssteuerungsklappe 24 ist ferner so gestaltet und angeordnet, dass ein zweiter Oberflächenabschnitt 30 der Strömungssteuerungsklappe 24 in der in Figur 3 gezeigten zweiten Stellung der Strömungssteuerungsklappe 24 in einem Winkel zu einem Wandabschnitt 32 des Strömungskanalabschnitts 16 ausgerichtet ist, der sich in Strömungsrichtung der durch den Strömungskanalabschnitt 16 strömenden Umgebungsluft vergrößert. Der zweite Oberflächenabschnitt 30 der Strömungssteuerungsklappe 24 bildet somit in der zweiten Stellung der Strömungssteuerungsklappe 24 gemeinsam mit dem Wandabschnitt 32 des Strömungskanalabschnitts 16 einen Diffusor, der eine Verlangsamung der Luftströmung durch den Strömungskanalabschnitt 16 bewirkt. Folglich wandelt sich ein Teil des dynamischen Drucks der Umgebungsluftströmung in statischen Druck um, so dass in dem Strömungskanalabschnitt 16 ein gegenüber dem Umgebungsdruck erhöhter Staudruck entsteht. Dieser Staudruck sorgt dafür, dass ausreichend Umgebungsluft durch den in dem Strömungskanalabschnitt 16 platzierten Wärmetauscher 20 geleitet wird.

Wenn sich die Strömungssteuerungsklappe 24 dagegen, wie in Figur 4 gezeigt, in ihrer dritten Stellung befindet, ist der zweite Oberflächenabschnitt der Strömungssteuerungsklappe 24 im Wesentlichen parallel zu dem Wandabschnitt 32 des Strömungskanals 16 ausgerichtet. In ihrer dritten Stellung beeinflusst die Strömungssteuerungsklappe 24 die Luftströmung durch den Strömungskanalabschnitt 16 somit lediglich minimal.

Der in dem Strömungskanalabschnitt 16 angeordnete Wärmetauscher 20 hat im Bodenbetrieb des Flugzeugs einen größeren Umgebungsluftbedarf als im Flugbetrieb des Flugzeugs. Im Flugbetrieb des Flugzeugs befindet sich die Strömungssteuerungsklappe 24 daher in ihrer in Figur 3 gezeigten zweiten Stellung, in der sie eine Minimierung des durch den Lufteinlass 12 verursachten zusätzlichen Luftwiderstands ermöglicht. Im Bodenbetrieb des Flugzeugs befindet sich die Strömungssteuerungsklappe 24 dagegen in ihrer dritten Stellung, in der sie den Strömungsquerschnitt des Lufteinlasses 12 maximal öffnet. Dadurch kann auch ein kleiner dimensioniertes Gebläse 22 ausreichend Umgebungsluft durch den Lufteinlass 12 in den Strömungskanalabschnitt 16 fördern, um eine ausreichende Versorgung des Wärmetauschers 20 mit Umgebungsluft zu gewährleisten.

## Patentansprüche

1. Luftkanal (10) zur Umgebungsluftzufuhr in einem Flugzeug, mit:
- einem Lufteinlass (12),
- einem den Lufteinlass umgebenden Flugzeugaußenhautabschnitt (18),
- einem sich stromabwärts des Lufteinlasses (12) erstreckenden Strömungskanalabschnitt (16),
- einer Fördereinrichtung (22), die dazu eingerichtet ist, Umgebungsluft durch den Lufteinlass (12) und den Strömungskanalabschnitt (16) zu fördern, und
- einer Strömungssteuerungsklappe (24), die in einer ersten Stellung den Lufteinlass (12) verschließt, in einer zweiten Stellung einen ersten Strömungsquerschnitt des Lufteinlasses (12) freigibt und in einer dritten Stellung einen gegenüber dem ersten Strömungsquerschnitt vergrößerten zweiten Strömungsquerschnitt des Lufteinlasses (12) freigibt, **dadurch gekennzeichnet, dass** die Strömungssteuerungsklappe (24) so gestaltet und angeordnet ist, dass ein erster Oberflächenabschnitt (28) der Strömungssteuerungsklappe (24) in der zweiten Stellung der Strömungssteuerungsklappe (24) im Bereich des Lufteinlasses (12) im Wesentlichen in einer Ebene mit dem den Lufteinlass (12) umgebenden Flugzeugaußenhautabschnitt (18) ausgerichtet ist, und dass der erste Oberflächenabschnitt (28) der Strömungssteuerungsklappe (24) in der dritten Stellung der Strömungssteuerungsklappe (24) im Bereich des Lufteinlasses (12) in einem Winkel zu dem den Lufteinlass (12) umgebenden Flugzeugaußenhautabschnitt (18) ausgerichtet ist.

2. Luftkanal nach Anspruch 1,
**dadurch gekennzeichnet, dass** die Strömungssteuerungsklappe (24) so gestaltet und angeordnet ist, dass ein zweiter Oberflächenabschnitt (30) der Strömungssteuerungsklappe (24) in der zweiten Stellung der Strömungssteuerungsklappe (24) in einem Winkel zu einem Wandabschnitt (32) des Strömungskanalabschnitts (16) ausgerichtet ist, so dass sich der Strömungsquerschnitt des Strömungskanalteilabschnitts, der gemeinsam aus dem zweiten Oberflächenabschnitt (30) der Strömungssteuerungsklappe (24) und dem Wandabschnitt (32) des Strömungskanalabschnitts (16) gebildet wird, in Strömungsrichtung der durch den Strömungskanalabschnitt (16) strömenden Umgebungsluft vergrößert.

3. Luftkanal nach Anspruch 2,
**dadurch gekennzeichnet, dass** die Strömungssteuerungsklappe (24) so gestaltet und angeordnet ist, dass der zweite Oberflächenabschnitt (30) der Strömungssteuerungsklappe (24) in der dritten Stellung der Strömungssteuerungsklappe (24) im Wesentlichen parallel zu dem Wandabschnitt (32) des Strömungskanalabschnitts (16) ausgerichtet ist.

4. Luftkanal nach einem der Ansprüche 1 bis 3,
**dadurch gekennzeichnet, dass** die Strömungssteuerungsklappe (24) so gestaltet und angeordnet ist, dass eine Kante der Strömungssteuerungsklappe (24) in der dritten Stellung der Strömungssteuerungsklappe (24) in eine das Flugzeug umströmende Luftströmung ragt.

5. Luftkanal nach einem der Ansprüche 1 bis 4,
**dadurch gekennzeichnet, dass** die Strömungssteuerungsklappe (24) einen im Wesentlichen dreieckigen Querschnitt aufweist.

6. Luftkanal nach einem der Ansprüche 1 bis 5,
**dadurch gekennzeichnet, dass** die Strömungssteuerungsklappe (24) um eine Achse (26) drehbar ist, die im Bereich des Schwerpunkts der Strömungssteuerungsklappe (24) angeordnet ist.

7. Luftkanal nach Anspruch 6,
**dadurch gekennzeichnet, dass** die Drehachse (26) der Strömungssteuerungsklappe (24) im Wesentlichen im Bereich einer sich durch den Strömungskanalabschnitt (16) erstreckenden zentralen Längsachse (L) angeordnet ist.

8. Luftkanal nach einem der Ansprüche 1 bis 7,
**gekennzeichnet durch** eine Betätigungseinrichtung, die dazu eingerichtet ist, die Strömungssteuerungsklappe (24) stufenlos zwischen ihrer ersten und ihrer dritten Stellung zu bewegen.

9. Luftkanal nach einem der Ansprüche 1 bis 8,
**gekennzeichnet durch** eine Halteeinrichtung, die dazu eingerichtet ist, die Strömungssteuerungsklappe (24) in einer gewünschten Stellung zu halten.

10. Verfahren zum Betreiben eines Luftkanals nach einem der Ansprüche 1 bis 9, bei dem die Strömungssteuerungsklappe (24) zur Versorgung einer Flugzeugeinrichtung mit Umgebungsluft im Flugbetrieb eines mit dem Luftkanal (10) ausgestatteten Flugzeugs in ihre zweite Stellung bewegt wird und bei dem die Strömungssteuerungsklappe (24) zur Versorgung der Flugzeugeinrichtung mit Umgebungsluft im Bodenbetrieb des mit dem Luftkanal (10) ausgestatteten Flugzeugs in ihre dritte Stellung bewegt wird.

## Claims

1. Air duct (10) for supplying ambient air in an aircraft, comprising:
- an air inlet (12),
- an aircraft outer skin portion (18) surrounding the air inlet (12)
- a flow duct portion (16) extending downstream of the air inlet (12),
- a feed device (22) that is devised to feed ambient air through the air inlet (12) and the flow duct portion (16), and
- a flow control flap (24) that in a first position closes the air inlet (12), in a second position releases a first flow cross section of the air inlet (12) and in a third position releases a second flow cross section that is larger than the first flow cross section,
**characterized in that** the flow control flap (24) is so designed and disposed that a first surface portion (28) of the flow control flap (24) in the second position of the flow control flap (24) is aligned in the region of the air inlet (12) substantially in one plane and substantially flush with the aircraft outer skin portion (18) surrounding the air inlet (12), and **in that** the first surface portion (28) of the flow control flap (24) in the third position of the flow control flap (24) is aligned in the region of the air inlet (12) at an angle to the aircraft outer skin portion (18) surrounding the air inlet (12).

2. Air duct according to claim 1,
**characterized in that** the flow control flap (24) is so designed and disposed that a second surface portion (28) of the flow control flap (24) in the second position of the flow control flap (24) is aligned at an angle to a wall portion (32) of the flow duct portion (16) such that the flow cross section of the flow duct partial portion which is commonly formed by the second surface portion (28) of the flow control flap (24) and the wall portion (32) of the flow duct portion (16) increases in flow direction of the ambient air flowing through the flow duct portion (16).

3. Air duct according to claim 2,
**characterized in that** the flow control flap (24) is so designed and disposed that the second surface portion (28) of the flow control flap (24) in the third position of the flow control flap (24) is aligned substantially parallel to the wall portion (32) of the flow duct portion (16).

4. Air duct according to one of claims 1 to 3,
**characterized in that** the flow control flap (24) is so designed and disposed that in the third position of the flow control flap (24) an edge of the flow control flap (24) projects into an air flow flowing around the aircraft.

5. Air duct according to one of claims 1 to 4,
**characterized in that** the flow control flap (24) has a substantially triangular cross section.

6. Air duct according to one of claims 1 to 5,
**characterized in that** the flow control flap (24) is rotatable about an axis (26) that is disposed in the region of the centre of gravity of the flow control flap (24).

7. Air duct according to claim 6,
**characterized in that** the axis of rotation (26) of the flow control flap (24) is disposed substantially in the region of a central longitudinal axis (L) extending through the flow duct portion (16).

8. Air duct according to one of claims 1 to 7,
**characterized by** an actuating device that is devised to move the flow control flap (24) steplessly between its first and its third position.

9. Air duct according to one of claims 1 to 8,
**characterized by** a retaining device that is devised to retain the flow control flap (24) in a desired position.

10. Method of operating an air duct according to one of claims 1 to 9, wherein the flow control flap (24) for supplying ambient air to an aircraft device during cruising of an aircraft equipped with the air duct (10) is moved into its second position and wherein the flow control flap (24) for supplying ambient air to the aircraft device during ground operation of the aircraft equipped with the air duct (10) is moved into its third position.

## Revendications

1. Conduit d'air (10) destiné à l'alimentation en air ambiant dans un avion, comprenant :
- une entrée d'air (12),
- une section d'enveloppe extérieure d'avion (18) entourant l'entrée d'air ambiant,
- une section de conduit d'écoulement (16) s'étendant en aval de l'entrée d'air (12),
- un dispositif de transport (22) adapté pour transporter l'air ambiant à travers l'entrée d'air (12) et la section de conduit d'écoulement (16), et
- un volet de commande d'écoulement (24) qui ferme l'entrée d'air (12) dans une première position, qui libère une première section transversale d'écoulement de l'entrée d'air (12) dans une deuxième position et qui libère une seconde section transversale d'écoulement, supérieure à la première section transversale d'écoulement, de l'entrée d'air (12) dans une troisième position, **caractérisé en ce que** le volet de commande d'écoulement (24) est conçu et disposé de telle sorte qu'une première partie de surface (28) du volet de commande d'écoulement (24) est orientée, dans la deuxième position du volet de commande d'écoulement (24), dans la région de l'entrée d'air (12) sensiblement dans un plan avec la section d'enveloppe extérieure d'avion (18) entourant l'entrée d'air (12) et **en ce que** la première partie de surface (28) du volet de commande d'écoulement (24) est orientée, dans la troisième position du volet de commande d'écoulement (24), dans la région de l'entrée d'air (12) en formant un angle par rapport à la section d'enveloppe extérieure d'avion (18) entourant l'entrée d'air (12).

2. Conduit d'air selon la revendication 1, **caractérisé en ce que** le volet de commande d'écoulement (24) est conçu et disposé de telle sorte qu'une seconde partie de surface (30) du volet de commande d'écoulement (24) est orientée, dans la deuxième position du volet de commande d'écoulement (24), en formant un angle par rapport à une partie de paroi (32) de la section de conduit d'écoulement (16) de sorte que la section transversale d'écoulement de la partie de conduit d'écoulement, qui est formée conjointement de la seconde partie de surface (30) du volet de commande d'écoulement (24) et de la partie de paroi (32) de la section de conduit d'écoulement (16), augmente en direction d'écoulement de l'air ambiant s'écoulant à travers la section de conduit d'écoulement (16).

3. Conduit d'air selon la revendication 2, **caractérisé en ce que** le volet de commande d'écoulement (24) est conçu et disposé de telle sorte que la seconde partie de surface (30) du volet de commande d'écoulement (24) est orientée, dans la troisième position du volet de commande d'écoulement (24), sensiblement parallèlement à la partie paroi (32) de la section de conduit d'écoulement (16).

4. Conduit d'air selon l'une des revendications 1 à 3, **caractérisé en ce que** le volet de commande d'écoulement (24) est conçu et disposé de telle sorte qu'un bord du volet de commande d'écoulement (24) fait saillie, dans la troisième position du volet de commande d'écoulement (24), dans un écoulement d'air circulant autour de l'avion.

5. Conduit d'air selon l'une des revendications 1 à 4, **caractérisé en ce que** le volet de commande d'écoulement (24) a une section transversale sensiblement triangulaire.

6. Conduit d'air selon l'une des revendications 1 à 5, **caractérisé en ce que** le volet de commande d'écoulement (24) peut tourner sur un axe (26) qui est disposé dans la région du centre de gravité du volet de commande d'écoulement (24).

7. Conduit d'air selon la revendication 6, **caractérisé en ce que** l'axe de rotation (26) du volet de commande d'écoulement (24) est disposé sensiblement dans la région d'un axe longitudinal central (L) s'étendant à travers la section de conduit d'écoulement (16).

8. Conduit d'air selon l'une des revendications 1 à 7, **caractérisé par** un dispositif d'actionnement qui est adapté pour déplacer le volet de commande d'écoulement (24) de manière continue entre sa première position et sa troisième position.

9. Conduit d'air selon l'une des revendications 1 à 8, **caractérisé par** un dispositif de maintien qui est adapté pour maintenir le volet de commande d'écoulement (24) dans une position souhaitée.

10. Procédé pour faire fonctionner un conduit d'air selon l'une des revendications 1 à 9, dans lequel le volet de commande d'écoulement (24) est déplacé dans sa deuxième position pour alimenter un dispositif d'avion en air ambiant pendant le vol d'un avion équipé du conduit d'air (10) et dans lequel le volet de commande d'écoulement (24) est déplacé dans sa troisième position pour alimenter le dispositif d'avion en air ambiant pendant le fonctionnement au sol de l'avion équipé du conduit d'air (10).
